(19) **Europäisches Patentamt / European Patent Office / Office européen des brevets**

(11) **EP 4 431 413 A1**

(12) # EUROPEAN PATENT APPLICATION
published in accordance with Art. 153(4) EPC

(43) Date of publication:
**18.09.2024 Bulletin 2024/38**

(21) Application number: **22892710.9**

(22) Date of filing: **04.11.2022**

(51) International Patent Classification (IPC):
**B65D 41/34** $^{(2006.01)}$

(52) Cooperative Patent Classification (CPC):
**B65D 41/34; C08L 23/06**

(86) International application number:
**PCT/JP2022/041175**

(87) International publication number:
**WO 2023/085211 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.11.2021  JP 2021184919**

(71) Applicants:
- **Toyo Seikan Group Holdings, Ltd.**
  **Shinagawa-ku**
  **Tokyo 141-8627 (JP)**
- **Nippon Closures Co., Ltd.**
  **Tokyo 141-0022 (JP)**

(72) Inventors:
- **SHIBATA, Koki**
  **Yokohama-shi, Kanagawa 240-0062 (JP)**
- **YAMADA, Toshiki**
  **Yokohama-shi, Kanagawa 240-0062 (JP)**
- **KADOWAKI, Nao**
  **Yokohama-shi, Kanagawa 240-0062 (JP)**
- **NAKAGAWA, Sei**
  **Hiratsuka-shi, Kanagawa 254-0021 (JP)**
- **TOMITAKA, Yuji**
  **Hiratsuka-shi, Kanagawa 254-0021 (JP)**

(74) Representative: **J A Kemp LLP**
**80 Turnmill Street**
**London EC1M 5QU (GB)**

(54) **SCREW CAP EQUIPPED WITH TAMPER-EVIDENT BAND**

(57)    A screw cap 50 with a TE band 3 includes polyethylene having a biomass level (ASTM D6866-11) of a carbon component of 50 mass% or more and less than 94 mass%, or a weight average molecular weight of 200,000 or more and a molecular weight distribution of 12 or more.

Fig. 1

EP 4 431 413 A1

**Description**

Technical Field:

The present invention relates to a screw cap provided with a tamper-evident band (TE band) which serves as an indicator that a container has been opened. More specifically, the present invention relates to a screw cap from which the TE band is removed when the cap is opened.

Background Art:

Screw caps provided with a TE band as an indicator of whether a container has been opened have been widely used for the purpose of ensuring the quality of the contents of the container, preventing unauthorized access, and the like. This type of caps work as follows: When the cap is rotated and unscrewed, a bridge connecting a cap body and the TE band is broken, so that the TE band is removed from the cap body, which serves to indicate that the cap has been opened. Further, the cap from which the TE band has been removed may be reattached to the mouth of the container to reseal it.

The above-described screw caps provided with the TE band are usually made from olefin-based resin by compression molding, injection molding or the like. Common examples of the olefin-based resin include polyethylene and polypropylene. In particular, polyethylene caps are often used for containers of polyethylene terephthalate (PET), because polyethylene is slightly superior in flexibility to polypropylene and can ensure high adhesion to the mouth of PET containers.

Meanwhile, the release of carbon dioxide gas has been a serious environmental problem in recent years. Under the circumstances, it has been desired to use olefin-based resin of plant origin (such as biopolyethylene and biopolypropylene). Olefin-based resin of plant origin is such that ethylene or propylene as a raw material is derived from a plant that grows absorbing atmospheric $CO_2$. Thus, olefin-based resin of plant origin contributes to carbon neutrality and greatly helps mitigate global warming, as compared with petroleum-derived resin.

Also in the field of caps, Patent Document 1 proposes a hinge cap (toggle-type cap) made from an olefin-based resin of plant origin. Further, Patent Document 2 proposes a two-piece screw cap including a plant-derived packing on the inner surface of its top panel.

Prior Art Documents:

Patent Documents:

Patent Document 1: JP-A-2013-184727
Patent Document 2: JP-A-2020-142835

Summary of the Invention:

Problems to be solved by the invention:

Olefin-based resin of plant origin has a relatively high molecular weight since ethylene or propylene as a monomer is produced from plant-derived ethanol or propanol. As such, olefin-based resin of plant origin is marketed as a mixture with olefin-based resin of fossil fuel origin for physical property adjustment. In other words, commercially available olefin-based resin of plant origin varies in grade from low to high biomass levels.

A higher biomass level is supposed to be desirable for a variety of uses. However, a study by the present inventors has found that in a screw cap with a TE band of polyethylene, a higher biomass level makes it more difficult for a bridge connecting the TE band and a cap body to be broken immediately. For example, when the biomass level is 50 mass% or more, the bridge is stretched, so that the so-called break angle of the bridge increases, which frequently results in the following problem: The cap cannot be removed easily from the mouth of a container, or is opened with the TE band connected because of the bridge partially not broken. The cap removed from the mouth of the container with the TE band connected no longer serves as a tamper-evident cap. Thus, using polyethylene with a high biomass level for the cap with the TE band may necessitate a change in the form of the bridge.

In light of the foregoing, an object of the present invention is to provide a screw cap with a TE band that has effectively overcome the problem in bridge breakage even though it is made from polyethylene with a high biomass level.

Means for solving the problems:

The present invention provides a screw cap with a TE band, including polyethylene having a biomass level (ASTM D6866-11) of a carbon component of 50 mass% or more and less than 94 mass%, a weight average molecular weight of 200,000 or more, and a molecular weight distribution of 12 or more.

It is suitable for the screw cap of the present invention that:

(1) The polyethylene has a melt flow rate (MFR: 190°C) of 1 g/10 min or more and less than 20 g/10 min;
(2) The polyethylene has a density of 930 kg/m$^3$ or more; and
(3) The TE band includes a flap piece as a locking means.

Effect of the Invention:

Polyethylene for use in a TE band provided in the screw cap of the present invention has an extremely high biomass level of 50 to 90 mass% and a weight average molecular weight (Mw) and a molecular weight distribution (Mw/Mn) adjusted within certain ranges. Thus, regardless of the large content of plant-derived polyethylene, the cap has effectively overcome the problem that a bridge connecting the TE band and a cap body cannot be broken easily.

For example, as illustrated in Examples below, caps made from polyethylene having Mw and Mw/Mn that fall outside the ranges specified in the present invention have biomass levels of 0 mass% (Comparative Example 1), 31 mass% (Comparative Example 3), and 50 mass% (Comparative Example 2), respectively, and the break angle of the bridge increases with the biomass level. In the cap with a biomass level of 50 mass%, the break angle is 299 degrees (which means that for unscrewing the cap sealing the mouth of a container, it needs to be rotated about 300 degrees before the bridge is broken.)

On the other hand, in the cap of the present invention (Example 1) that is made from polyethylene having Mw and Mw/Mn within the ranges specified in the present invention, regardless of a biomass level of 51 mass%, the break angle of the bridge is 288 degrees, which is about 10 degrees smaller than that in Comparative Example 3, resulting in immediate bridge breakage. Therefore, even though the screw cap with the TE band of the present invention is made from polyethylene with a high biomass level, the screw cap can be unscrewed smoothly, allowing the TE band to effectively serve a quality assurance function, and can be suitably used to reseal a container. Consequently, the present invention can effectively contribute to carbon neutrality.

Brief Description of the Drawings:

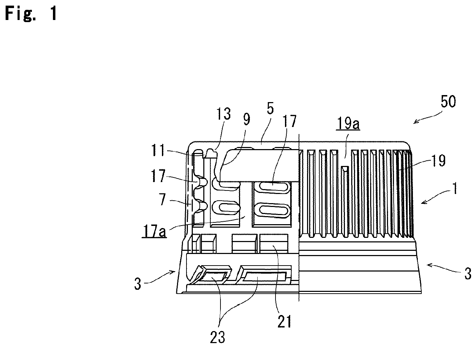

[Fig. 1]: a partial cross-sectional side view of a screw cap of the present invention.

Mode for Carrying Out the Invention:

<Basic structure of cap>

Referring to Fig. 1, a screw cap with a TE band of the present invention, which is generally indicated by reference numeral 50, includes a cap body 1 and a TE band (tamper-evident band) 3.

The cap body 1 includes a top panel 5 and a skirt (cylindrical side wall) 7 that extends perpendicularly downward from the peripheral edge of the top panel 5.

The top panel 5 includes, on its inner surface, an inner ring 9 that is formed away from the skirt 7 to extend downward with a shape slightly bulging outward, a short outer ring 11 formed between the inner ring 9 and the skirt 7, and a small projection 13 provided circumferentially between the inner ring 9 and the outer ring 11.

The skirt 7 includes a female screw 17 on its inner surface. The female screw 17, which is designed to be screwed with a male screw provided on a mouth of a container (not shown), is usually partially notched so that a path 17a is formed in the height direction. When the inside of the cap is cleaned, a cleaning liquid is allowed to flow down through the path 17a without remaining in the cap.

On the outer surface of the skirt 7, antiskid knurling 19 is formed for easy rotation of the cap 50 (cap body 1). The knurling 19 has a notch 19a at its upper end part. The notch 19a serves as a marker so that the cap 50 is tightened to a constant degree when it is fixedly screwed to the mouth of the container. More specifically, when the cap 50 is mounted on the mouth of the container with the female screw 17 screwed, the location of the notch 19a shows whether the cap has been tightened sufficiently or insufficiently.

When the cap 50 (cap body 1) is sufficiently tightened and firmly fixed to the mouth of the container (not shown), the mouth of the container is positioned such that the upper end of the inside of the mouth closely adheres to the outer surface side of the inner ring 9 while the outer corner of the mouth at its upper end abuts the outer ring 11. Thus, the cap 50 is firmly fixed to the mouth of the container without backlash, so that the mouth is sealed. In addition, the upper end surface of the mouth of the container abuts the small projection 13, resulting in improved sealability.

The TE band 3 for use with the cap body 1 of the above-described form is of a form known per se. The TE band 3 is connected to the lower end of the skirt 7 of the cap body 1 by a breakable bridge 21, and includes on its inner surface a plurality of upward flap pieces 23 that are provided at intervals in the circumferential direction to function as a locking member.

More specifically, when the cap 50 is being fixedly screwed to the mouth of the container, allowing the female screw 17 to be screwed, the flap pieces 23, which are open from the inner surface of the TE band 3, get closed to face the inner surface of the TE band 3, so that the flap pieces 23 are allowed to climb over a jaw formed on the mouth of the container. When the flap pieces 23 have climbed over the jaw, they are reopened due to their elasticity. This is the state where the cap 50 is mounted on the mouth of the container.

When the cap 50 (cap body 1) in the above-described state is rotated in the opening direction, so that the female screw 17 is gradually unscrewed, the cap body 1 moves upward along the mouth of the container as the unscrewing takes place, while the TE band 3 is restricted from moving upward because the tips of the flap pieces 23 abut the lower surface of the jaw of the container and are locked. Accordingly, as the cap body 1 continues to be rotated in the opening direction, stress is concentrated in the bridge 21, so that the bridge 21 is broken. The angle made during the time from when the cap body 1 starts rotating in the opening direction until the bridge 21 is broken is referred to as a break angle.

As can be understood from the description above, in the cap 50 that has been rotated in the opening direction until the cap body 1 is removed from the mouth of the container, the bridge 21 is broken, so that the TE band 3 is separated from the cap body 1 and stays on the container mouth side. Judging from the fact that the TE band 3 is separated from the cap body 1, general consumers can recognize that the cap 50 (cap body 1) has been once opened. This is how the screw cap 50 with the TE band of the present invention works.

In the above-described embodiment, the flap pieces 23 are provided on the inner surface of the TE band 3 as a locking means to the jaw of the container. Alternatively, such a locking means may be in the form of a hook-shaped projection such as an undercut. However, in order to maximize the advantage of the present invention, it is most suitable to use the flap pieces 23 as a locking means, because the problem in bridge breakage due to an increase in the biomass level tends to be solved more significantly by the TE band 3 with the flap pieces 23.

<Cap molding material>

The screw cap with the above-described structure is made from polyethylene by a molding means such as compression molding or injection molding.

The polyethylene as used herein includes not only homopolymers of ethylene but also copolymers of ethylene and a slight amount of $\alpha$-olefin (having approximately 3 to 7 carbon atoms, for example.)

The polyethylene for use in the present invention contains so-called biopolyethylene. Biopolyethylene is obtained from a plant that grows absorbing carbon dioxide. For example, ethanol (called bioethanol), which is produced by the fermentation of a residue obtained after the extraction of sugar cane juice, is used as a raw material. The bioethanol is dehydrated to form ethylene, which is then polymerized to produce biopolyethylene. As compared with common fossil fuel-derived polyethylene (hereinafter, referred to as petroleum-based polyethylene), biopolyethylene produces zero carbon dioxide emissions in total, thereby contributing significantly to carbon neutrality. In other words, the use of polyethylene containing a larger amount of bioethylene contributes more to reduced greenhouse gas (carbon dioxide) emissions.

Meanwhile, biopolyethylene contains radiocarbon $^{14}$C, which is not contained in petroleum-based polyethylene. As such, the measurement of $^{14}$C concentration can reveal the concentration of biopolyethylene content (i.e., the biomass level) of commercially available polyethylene. Methods for determining the biomass level are specified in ASTM D6866-11, as described in Examples below.

From the viewpoint of carbon neutrality, the polyethylene for use in the formation of the cap of the present invention has a biomass level of a carbon conmponent of 50 mass% or more. Polyethylene with a biomass level of less than 50 mass% cannot significantly contribute to carbon neutrality. Polyethylene with an extremely high biomass level (of 94 mass% or more, for example), if produced at all, is unsatisfactory in terms of cost. (Since biopolyethyelne is expensive, it is usually marketed as a blend with petroleum-based polyethylene.)

However, when the polyethylene with a biomass level of 50 mass% or more is used for the formation of the screw cap 50 of the above-described form, the problem in bridge breakage arises. More specifically, when the cap 50 mounted on the mouth of the container is rotated to be opened, the bridge 21 is stretched and is hardly broken, resulting in a larger-than-necessary break angle of the bridge 21. This tendency becomes more likely as the biopolyethylen content (i.e., the biomass level) increases. Consequently, the bridge 21 may be partially unbroken, so that the cap body 1 may be unscrewed from the mouth of the container with the bridge 21 partially connected to the TE band 3.

In order to solve the problem in bridge breakage, it is necessary in the present invention to adjust the polyethylene with a biomass level of 50 mass% or more and less than 94 mass% so that it has:

a weight average molecular weight Mw in a range of 200,000 or more, particularly 250,000 or more; and
a molecular weight distribution Mw/Mn in a range of 12 or more, particularly 14 or more.

It remains to be determined why polyethylne with a higher biomass level is more likely to cause the problem in bridge breakage. Considering that biopolyethylene in production is of a grade that has a relatively high molecular weight or a narrow molecular weight distribution, it is presumed that a higher biomass level disrupts the balance of physical properties and, thus, becomes more likely to cause the problem in bridge breakage. On this account, the polyethylene for use in the present invention is adjusted by using commercially available petroleum-based polyethylene so that it has a biomass level of 50 mass% or more and further a weight average molecular weight Mw and a molecular weight distribution Mw/Mn in the aforementioned ranges. As a result, the screw cap 5 with the TE band 3 has overcome the problem in bridge breakage even though it is made from the polyethylene with a high biomass level.

The physical properties of the polyethylene for use in the formation may be adjusted by blending petroleum-based polyethylene (or biopolyethylene-containing polyethylene) according to the biopolyethylene content (biomass level), Mw, Mw/Mn and the like of the polyethylene to be adjusted so that it has a biomass level of not less than 50 mass% and Mw or Mw/Mn in the predetermined range.

In adjusting the physical properties, it is preferable, when forming the cap 50 by compression molding or injection molding, that the polyethylene has, for example, a melt flow rate (MFR: 190°C) in a range of 1 g/10 min or more and less than 20 g/10 min. In addition, it is suitable for the polyethylene to have a density of 930 kg/m$^3$ or more, more preferably 940 kg/m3, for the purpose of imparting a suitable opening torque to the cap 50.

Excellent effects of the present invention will be described by way of Examples below.

Examples:

<Formation of cap>

A cap was formed by compression molding. A plurality of types of resin pellets as raw materials were stirred with a blender by a dry blending method and fed to an extruder. The molding temperature was 170°C, and the molding speed was 800 pieces/min.

<Preparation of evaluation sample>

A polyethylene terephthalate container with a mouth-and-neck portion of 28 mm in nominal diameter was filled with 500 mL of water, and a container lid was mounted on the mouth-and-neck portion with a torque of 180 N·cm, followed by a sterilization treatment at 75°C for 30 seconds and at 30°C for 30 seconds.

<Opening torque evaluation of cap>

The thus-prepared evaluation sample container was rotated in the opening direction until it was removed from the mouth-and-neck portion of the container. The initial torque at this time (i.e., the maximum torque required to start rotating the container lid) was measured for the five evaluation samples, and the average was determined as the opening torque. When the opening torque fell within a range of 100 to 150 N·cm, the cap was evaluated as "o". When the opening torque fell outside the range, the cap was evaluated as "×".

<Bridge break angle evaluation of cap>

The evaluation sample container prepared was rotated in the opening direction until it was removed from the mouth-and-neck portion of the container. The rotation angle of the container lid made during the time from when the lid started rotating until the bridge started to be broken was measured for the five evaluation samples, and the average was determined as the break angle of the bridge. When the break angle of the bridge was smaller than 290°, the cap was evaluated as "o". When the break angle was not smaller than 290°, the cap was evaluated as "×", because the TE band portion might not be separated properly.

<Molecular weight evaluation>

The cap was cut into pieces with scissors and dissolved in o-dichlorobenzene, followed by hot filtration through a filter with a pore diameter of 0.5 μm. The filtrate was used as an evaluation sample.

For molecular weight measurement, PL-GPC220, a device manufactured by Agilent Technologies Japan, Ltd.,

was used.

Two Plgel Olexis columns manufactured by Agilent Technologies Japan, Ltd. were used along with a guard column.

As an eluent, o-dichlorobenzene at 145°C with a concentration of 0.1 wt/vol% was used, and an analysis was performed at a flow rate of 1.0 mL/min.

A refractive index detector (RI) was used for detection.

From the measured molecular weight distribution, the number average molecular weight (Mn), the weight average molecular weight (Mw), and the polydispersity (Mw/Mn) were evaluated.

<Melt flow rate (MFR) evaluation>

A melt indexer F-F01 manufactured by Toyo Seiki Seisaku-sho, Ltd. was used.

For use as a raw material, the cap was cut into pieces with scissors. The mass M obtained after a 5-minute test was doubled to obtain the MFR value. In Comparative Example 4, the mass M after a 2-minute test was quintupled to obtain the MFR value.

$$MFR \ (g/min) = M \times 2$$

$$MFR \ (g/min) = M \times 5$$

<Biomass level evaluation>

According to ASTM D6866-21, the carbon isotope $^{14}C$ was measured by Method B for the evaluation of biomass level. $^{14}C$ is produced constantly and is present at a uniform rate in the atmosphere, but $^{14}C$ in petroleum or plants decreases with time. Considering that the half-life of $^{14}C$ is 5730 years, petroleum that has been stored underground for millions of years or more contains no $^{14}C$.

pMC (percent modern carbon; 513C-corrected), which is the ratio of the $^{14}C$ concentration of sample carbon to standard modern carbon, was measured as the biomass level (%) of the cap. Biomass as a raw material was supposed to have been manufactured in 2015.

The cap was cut into pieces with scissors, followed by combustion to produce carbon dioxide. The carbon dioxide was purified in a vacuum line, and then reduced with hydrogen in the presence of an iron catalyst to form graphite as a measurement sample. Oxalic acid supplied by National Institute of Standards and Technology (NIST) was used as a standard sample for measurement.

The device used was a dedicated $^{14}C$-AMS machine manufactured by NEC corporation.

<Measurement of density>

AccuPyc, a dry density meter manufactured by SHIMADZU CORPORATION, was used.

Measurement was carried out 10 times at a temperature of 23°C using a 10-cc measuring cell. The average of the 10 measurements was adopted. The cap was cut into pieces with scissors and put into the cell for measurement.

<Example 1>

A cap was made from a combination of a petroleum-derived HDPE resin and a plant-derived HDPE resin offered commercially. The cap obtained had a composition with a biomass level, a molecular weight, a molecular weight distribution, and physical properties as shown in Table 1.

<Comparative Example 1>

A cap was made only from a petroleum-derived HDPE resin offered commercially. The cap had a biomass level, a molecular weight, a molecular weight distribution, and physical properties as shown in Table 1.

<Comparative Example 2>

A cap was made from a combination of a petroleum-derived HDPE resin and a plant-derived HDPE resin offered commercially that were different from those in Example 1. The cap had a biomass level, a molecular weight, a molecular weight distribution, and physical properties as shown in Table 1.

<Comparative Example 3>

A cap was made from a petroleum-derived HDPE resin and a plant-derived HDPE resin offered commercially that were different from those in Example 1 and were combined in a different way from Comparative Example 2. The cap had a biomass level, a molecular weight, a molecular weight distribution, and physical properties as shown in Table 1.

<Comparative Example 4>

A cap was made from a plant-derived HDPE resin offered commercially. The cap had a biomass level, a molecular weight, a molecular weight distribution, and physical properties as shown in Table 1.

[Table 1]

| | Biomass level (%) | Mn | Mw | Mw/Mn | MFR (g/ 10 min) | Density (kg/m³) | Opening torque | Bridge break |
|---|---|---|---|---|---|---|---|---|
| Example 1 | 51 | 20,200 | 288,000 | 14.3 | 2.9 | 943.1 | ○ | ○ |
| Comparative Example 1 | 0 | 15,200 | 288,000 | 18.9 | 2.5 | 948.2 | ○ | ○ |
| Comparative Example 2 | 50 | 20,900 | 237,000 | 11.3 | 4.8 | 945.6 | ○ | × |
| Comparative Example 3 | 31 | 18,200 | 264,000 | 14.5 | 3.9 | 946.6 | ○ | ○ |
| Comparative Example 4 | 98 | 29,500 | 199,000 | 6.7 | 7.5 | 940.5 | ○ | × |

Explanations of Letters or Numerals:

1:      Cap body
3:      TE band
5:      Top panel
7:      Skirt
9:      Inner ring
11:    Outer ring
13:    Small projection
17:    Female screw
19:    Knurling
21:    Bridge
23:    Flap piece

**Claims**

1.  A screw cap with a tamper-evident band, comprising polyethylene having a biomass level (ASTM D6866-11) of a carbon component of 50 mass% or more and less than 94 mass%, a weight average molecular weight of 200,000 or more, and a molecular weight distribution of 12 or more.

2.  The screw cap with a tamper-evident band according to claim 1, wherein the polyethylene has a melt flow rate (MFR: 190°C) of 1 g/10 min or more and less than 20 g/10 min.

3.  The screw cap with a tamper-evident band according to claim 1, wherein the polyethylene has a density of 930 kg/m³ or more.

4. The screw cap with a tamper-evident band according to claim 1, wherein the tamper-evident band includes a flap piece as a locking means.

Fig. 1

## INTERNATIONAL SEARCH REPORT

International application No.

**PCT/JP2022/041175**

| A. | CLASSIFICATION OF SUBJECT MATTER |
|---|---|

***B65D 41/34***(2006.01)i
FI:   B65D41/34 114

According to International Patent Classification (IPC) or to both national classification and IPC

| B. | FIELDS SEARCHED |
|---|---|

Minimum documentation searched (classification system followed by classification symbols)

B65D41/34

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2019-14503 A (DAI NIPPON PRINTING CO., LTD.) 31 January 2019 (2019-01-31) | 1-4 |
| A | JP 2010-222482 A (YAMATO ESURON KK) 07 October 2010 (2010-10-07) | 1-4 |
| A | JP 2020-189641 A (TOPPAN PRINTING CO., LTD.) 26 November 2020 (2020-11-26) | 1-4 |
| A | JP 2019-530763 A (THAI POLYETHYLENE CO., LTD.) 24 October 2019 (2019-10-24) | 1-4 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 December 2022** | **10 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

| International application No. |
| --- |
| **PCT/JP2022/041175** |

| Patent document cited in search report | | | Publication date (day/month/year) | Patent family member(s) | | | Publication date (day/month/year) |
| --- | --- | --- | --- | --- | --- | --- | --- |
| JP | 2019-14503 | A | 31 January 2019 | (Family: none) | | | |
| JP | 2010-222482 | A | 07 October 2010 | (Family: none) | | | |
| JP | 2020-189641 | A | 26 November 2020 | (Family: none) | | | |
| JP | 2019-530763 | A | 24 October 2019 | US | 2019/0374919 | A1 | |
| | | | | US | 2020/0079938 | A1 | |
| | | | | WO | 2018/046667 | A1 | |
| | | | | WO | 2018/046665 | A1 | |
| | | | | EP | 3293211 | A1 | |
| | | | | EP | 3510054 | A1 | |
| | | | | CN | 108350098 | A | |
| | | | | CN | 108368186 | A | |
| | | | | KR | 10-2019-0054096 | A | |
| | | | | BR | 112019004678 | A2 | |
| | | | | BR | 112019004330 | A2 | |
| | | | | PT | 3293211 | T | |
| | | | | ES | 2746570 | T3 | |
| | | | | RU | 2019110827 | A | |

Form PCT/ISA/210 (patent family annex) (January 2015)

**EP 4 431 413 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013184727 A
- JP 2020142835 A